Europäisches Patentamt

European Patent Office

Office européen des brevets

(11) Numéro de publication : **0 412 870 B1**

(19)

# FASCICULE DE BREVET EUROPEEN

(12)

(45) Date de publication du fascicule du brevet :
27.10.93 Bulletin 93/43

(51) Int. Cl.⁵ : **F16C 25/06**

(21) Numéro de dépôt : **90402163.1**

(22) Date de dépôt : **26.07.90**

(54) **Palier radial à roulement précontraint et son application notamment aux suspensions d'automobiles.**

Le dossier contient des informations techniques présentées postérieurement au dépôt de la demande et ne figurant pas dans le présent fascicule.

(30) Priorité : **10.08.89 FR 8910788**

(43) Date de publication de la demande :
**13.02.91 Bulletin 91/07**

(45) Mention de la délivrance du brevet :
**27.10.93 Bulletin 93/43**

(84) Etats contractants désignés :
**CH DE ES GB IT LI NL SE**

(56) Documents cités :
**FR-A- 1 079 848**
**FR-A- 2 193 443**

(56) Documents cités :
**FR-A- 2 250 399**
**FR-A- 2 568 328**
**GB-A- 2 179 102**
**US-A- 4 002 380**

(73) Titulaire : **NADELLA**
**61 route de Foecy**
**F-18102 Vierzon (FR)**

(72) Inventeur : **Stephan, Gérard**
**41 avenue de Verdun**
**F-78290 Croissy-sur-Seine (FR)**
Inventeur : **Labedan, Jean-Denis**
**Route de Saint-Florent, Le Grand Moutet**
**F-18000 Bourges (FR)**

(74) Mandataire : **Mestre, Jean et al**
**c/o CABINET LAVOIX 2, place d'Estienne d'Orves**
**F-75441 Paris Cédex 09 (FR)**

## Description

L'invention concerne les roulements précontraints et a, plus particulièrement, pour objets un palier radial à roulement précontraint et son application notamment aux suspensions d'automobiles.

Les roulements, notamment radiaux, à précontrainte sont bien connus dans la technique.

Une solution à ce type de est, par exemple, exposée dans le brevet francais FR-A-1 079 848. Dans ce document, un roulement à éléments roulants mobiles qui sont disposés entre deux chemins de roulement est tel qu'on crée une réduction locale du jeu radial existant entre les deux chemins de roulement en vis-à-vis contre lesquels circulent les éléments roulants, qui est inférieure au diamètre de ces éléments roulants afin que ceux-ci soient soumis à une contrainte et à une déformation élastique lorsqu'ils traversent cet espace de dimension réduite. Pour parvenir à ceci, on établit au moins une dénivellation sur le pourtour circonférentiel de l'un au moins des chemins de roulement pour créer cette réduction locale du jeu radial. Dans ce type de roulement, le chemin qui présente cette dénivellation est exécuté dans une bague relativement épaisse qui est soit usinée, soit soumise à des forces extérieures pour générer ces différences de jeu radial.

Dans d'autres solutions, la précontrainte est obtenue à l'aide d'éléments élastiques, par exemple en caoutchouc ou métalliques, étrangers aux chemins de roulement, comme exposé dans le document GB-A-2 179 102. Selon ce document, le roulement sans jeu à précontrainte est spécialement conçu pour entre mis en place latéralement sur une pièce intérieure avec une portée extérieure qui sert de chemin de roulement intérieur à des éléments roulants. Cette solution comprend aussi une chemise composite constituée d'une enveloppe extérieure contenant un manchon élastique à l'intérieur duquel est logée une douille élastique mince dont la paroi intérieure sert de chemin de roulement extérieur aux éléments roulants. Les constituants de la chemise composite ont des contours ouverts et la douille élastique mince présente des discontinuités dans des zones espacées angulairement pour assurer une précontrainte par déformation radiale notamment du manchon élastique lors du montage du roulement.

On conçoit que ce type de roulement radial à précontrainte n'est pas exempt d'inconvénients. En effet, soit on utilise des bagues épaisses qu'il faut spécialement usiner ou soumettre à des contraintes à l'aide de dispositifs extérieurs, soit on fait appel à des éléments élastiques adjoints.

Ce type d'inconvénients par exemple grève les coûts de fabrication et de montage et augmente notablement la dimension radiale hors tout d'un tel roulement.

Le but de l'invention est de remédier à la plupart de ces inconvénients en faisant en sorte qu'on s'affranchisse des servitudes liées à l'utilisation de chemins de roulement portés par des bagues relativement épaisses et à l'utilisation d'éléments élastiques auxiliaires pour assurer la précontrainte.

L'invention a pour objet un palier radial à roulement précontraint dont les caractéristiques sont exposées dans la revendication 1.

L'invention a aussi pour objet l'application d'un tel palier notamment aux suspensions d'automobiles, par exemple à bras tirés.

Des modes de réalisation de l'invention ressortiront de la lecture de la description et des revendications 2 à 4 et 6 qui suivent ainsi que de l'examen du dessin annexé, donné seulement à titre d'exemple où :

- la Figure 1 est une coupe méridienne partielle d'une partie constitutive d'un palier selon l'invention;
- la Figure 2 est une section droite selon la ligne 2-2 de la Figure 1;
- la Figure 3 est une section droite d'une partie d'un palier selon l'invention ;
- la Figure 4 est une vue analogue à celle de la Figure 3 d'un palier complet selon l'invention, assemblé ;
- la Figure 5 est une vue analogue à celle de la Figure 4 aux dimensions notablement exagérées pour faire apparaître schématiquement la manière dont le logement du palier se déforme ;
- les Figure 6A et Figure 6B sont respectivement des vues de face et en coupe selon la ligne 6B de la Figure 6A, d'un mode de réalisation d'une pièce extérieure d'un palier selon l'invention ;
- les Figures 7, 8 et 9 sont des vues partielles, en coupe méridienne, de divers modes de réalisation de chemises intercalaires creuses d'un palier selon l'invention équipées d'éléments roulants en rouleaux ou aiguilles montés dans une cage, et
- la Figure 10 est une vue analogue à celles des Figures 7, 8 et 9 d'une autre variante d'exécution où les éléments roulants sont des billes.

Les paliers radiaux à roulements précontraints étant bien connus dans la technique, on ne traitera dans ce qui suit que de ce qui concerne directement ou indirectement l'invention. Pour le surplus, le spécialiste de la technique considérée puisera dans les solutions courantes classiques à sa disposition pour faire face aux problèmes particuliers auxquels il est confronté.

Dans ce qui suit, un même numéro de référence désigne toujours un même constituant quel que soit le mode de réalisation.

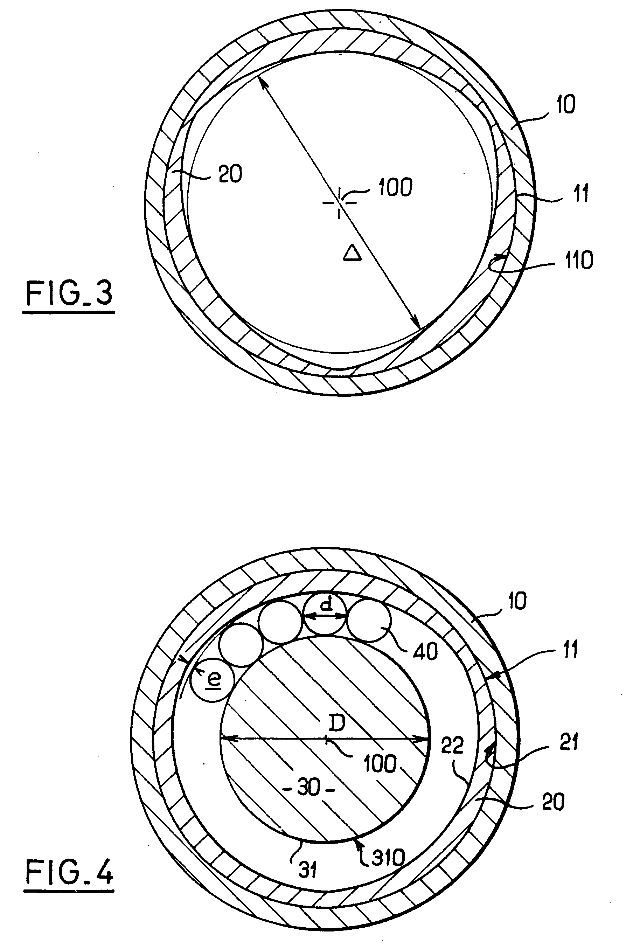

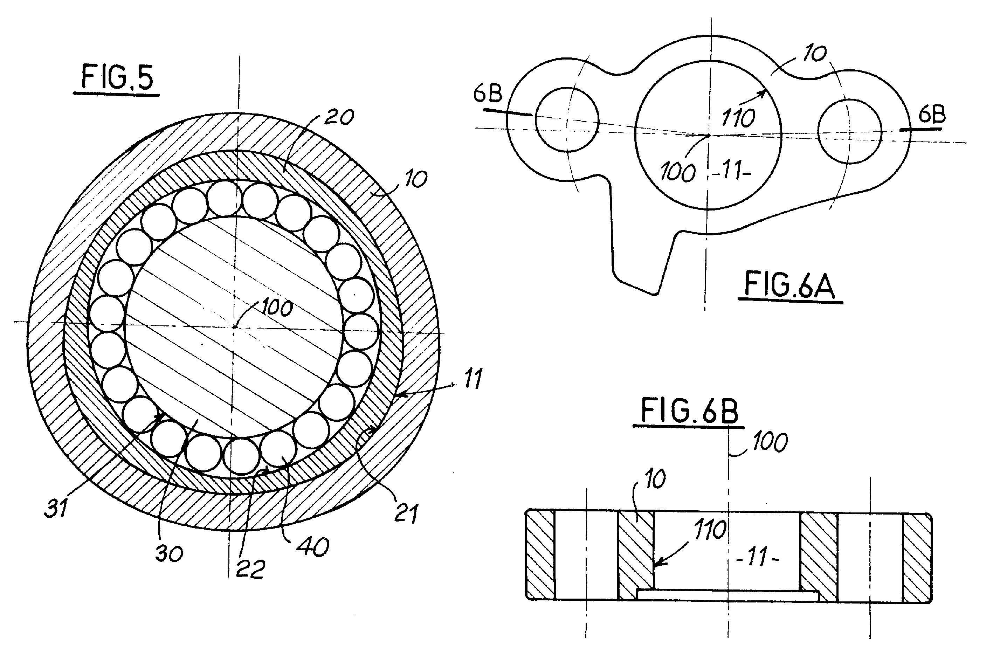

Comme on le voit notamment en examinant la Figure 4 ou la Figure 5, un palier radial à roulement précontraint selon l'invention comprend, essentiellement, une pièce 10 extérieure, une chemise 20 intercalaire creuse, une pièce 30 intérieure et des éléments roulants 40 interposés entre chemise intercalaire creuse 20 et pièce intérieure 30.

Pour la commodité de l'exposé, on décrira successivement chacun des constituants d'un palier selon l'invention avant d'en décrire le montage et le fonctionnement.

La pièce 10, extérieure, est munie d'un logement 11 cylindrique. Ce logement 11 présente un axe 100 et une paroi 110 intérieure à section droite circulaire. Cette paroi intérieure à section droite circulaire présente un diamètre donné déterminé.

Cette pièce extérieure 10 est, par exemple, une partie d'un bras tiré d'une suspension d'automobile dont un mode de réalisation est illustré partiellement, par exemple, sur les Figures 6A et 6B.

La chemise 20, intercalaire creuse, présente une paroi 21 extérieure à section droite circulaire dont le diamètre est au moins égal au diamètre donné déterminé de la section droite circulaire de la paroi intérieure 110 du logement 11. Cette chemise 20 présente, aussi, une paroi intérieure à section droite triangulaire curviligne. Cette section droite triangulaire curviligne comprend des sommets 221 relativement arrondis séparés par des arcs 222 dont la concavité est dirigée vers l'axe 100. Sommets et arcs sont régulièrement répartis et intercalés de manière à avoir une configuration équilatérale par exemple.

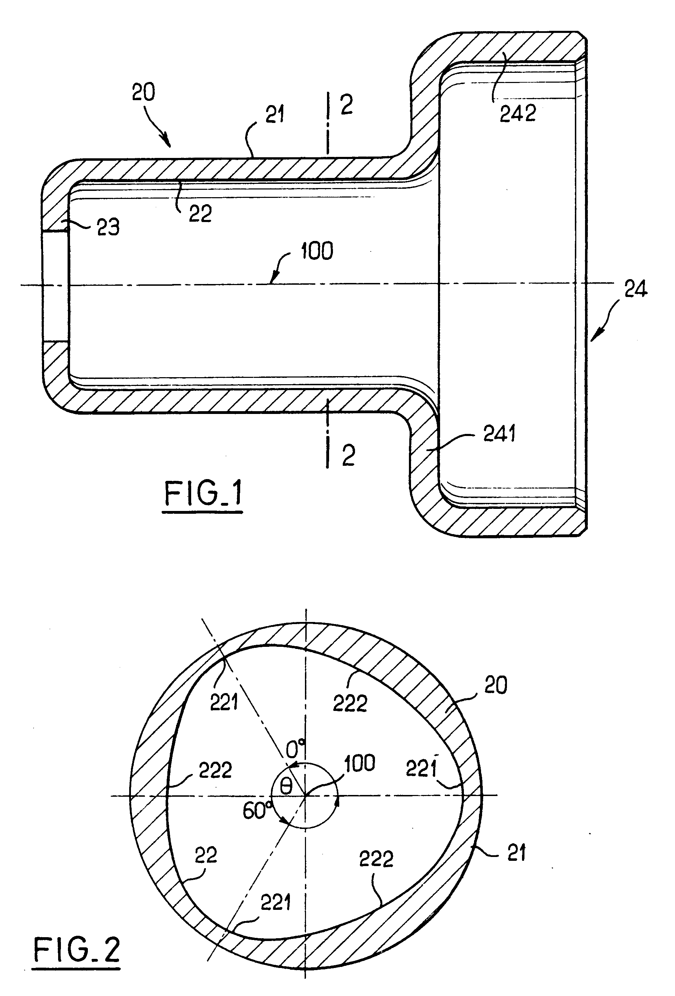

La géométrie de cette partie de la chemise ressort particulièrement bien de l'examen de la section droite de la Figure 2, relativement schématique, dont les dimensions ne sont pas à l'échelle pour faciliter l'illustration et la compréhension. Comme on peut l'y voir, cette chemise se présente à la manière d'une bague relativement mince dont l'épaisseur n'est pas constante. Comme on peut l'observer, cette géométrie présente une symétrie de rotation par exemple d'ordre trois par rapport à l'axe 100 et aussi une symétrie orthogonale pour chacun de ses tronçons.

La chemise 20 présente par exemple aussi, s'il y a lieu, à l'une de ses extrémités un rebord 23 radial centripète, et à son extrémité opposée une collerette 24 qui présente un fond 241, plan torique, terminé par un anneau 242, axial.

La pièce 30, intérieure, est munie d'une portée 31 extérieure. Cette portée 31 présente une paroi 310 extérieure à section droite circulaire.

Cette pièce 30 est, par exemple, un arbre destiné à supporter un bras d'une suspension d'automobile.

Les éléments roulants 40, par exemple des rouleaux ou des aiguilles, sont interposés entre la chemise 20 intercalaire creuse et la portée extérieure 31 de la pièce 30 intérieure. Il est clair que ces éléments roulants peuvent être aussi de configuration sphérique ou conique.

Comme on peut l'observer sur la Figure 4, de préférence, les éléments roulants prennent appui sur toute la circonférence de la paroi extérieure de la pièce intérieure, qui sert ainsi de chemin de roulement et ne prennent appui que localement sur une partie de la longueur des arcs de la paroi intérieure de la chemise, hors du voisinage des sommets de la section droite triangulaire curviligne, qui sert ainsi de chemin de roulement. On observera toutefois qu'un tel montage n'est pas absolument impératif.

Selon l'invention, les dimensions propres au diamètre donné déterminé de la section droite circulaire de la paroi intérieure du logement cylindrique, d'une part, et au diamètre de la section droite circulaire de la paroi extérieure de la chemise intercalaire, d'autre part, sont choisies de manière que la chemise 20 peut être engagée serrée dans le logement 11 afin que la pièce extérieure 10 et elle seule exerce une précontrainte sur la chemise.

De même, selon l'invention, le périmètre de la section droite triangulaire curviligne de la paroi intérieure 22 de la chemise 20 est plus grand que la circonférence d'un cercle dont le diamètre est égal à la somme du diamètre D de la section droite circulaire de la paroi extérieure 310 de la portée 31 de la pièce intérieure 30 augmenté de deux fois le diamètre $\underline{d}$ des éléments roulants 40.

Aussi, selon l'invention, le diamètre $\Delta$ d'un cercle inscrit tangent intérieurement aux arcs 222 de la section droite triangulaire curviligne de la paroi intérieure 22 de la chemise 20 est inférieur au diamètre $\underline{D}$ de la section droite circulaire de la paroi extérieure 310 de la portée 31 de la pièce intérieure 30 augmenté de deux fois le diamètre $\underline{d}$ des éléments roulants 40.

La chemise 20 est une bague relativement mince et obtenue par exemple par emboutissage ou par toute autre technique appropriée. En coordonnées polaires, l'épaisseur de cette bague varie conformément au tableau ci-après donné à titre d'exemple :

| $\theta$ ° | 0 | 5 | 10 | 15 | 20 | 25 | 30 | 35 | 40 | 45 | 50 | 55 | 60 |
|---|---|---|---|---|---|---|---|---|---|---|---|---|---|
| Variation d'épaisseur chemise | 0 | 0,006 | 0,021 | 0,047 | 0,080 | 0,119 | 0,160 | 0,201 | 0,240 | 0,273 | 0,299 | 0,314 | 0,320 |

Comme on peut s'en rendre compte, la précontrainte est exercée par la seule déformation élastique du logement dans lequel la chemise est montée serrée et, de préférence, d'une manière telle que la position axiale de la chemise dans le logement résulte seulement de cette contrainte sans qu'il soit nécessaire d'utiliser un dispositif d'arrêt axial. On comprend donc que la géométrie externe de la pièce extérieure n'est pas critique et que seul est important le fait qu'elle ait un comportement élastique pour développer la précontrainte.

Lorsque le palier selon l'invention est assemblé comme illustré sur la section de la Figure 4 ou 5, on voit que la pièce intérieure 30 une fois introduite est toujours précontrainte dans les zones des arcs 222 mais que, par contre au contraire, il existe toujours un certain jeu ou écart e entre le chemin de roulement de la paroi intérieure de la chemise et l'enveloppe extérieure de la trajectoire décrite par les éléments roulants 40, au voisinage des sommets.

Du fait des géométries adoptées selon l'invention, la mise en place de la partie intérieure 30 entraîne une déformation du logement 11 liée à l'existence de l'écart e que l'on vient d'indiquer. En effet, si cet écart n'existait pas, et si l'on montait la pièce intérieure 30 en précontrainte, le serrage serait entièrement répercuté par une extension du logement 11 : ceci aurait pour résultat la génération de précontraintes beaucoup plus importantes, incompatibles avec un bon fonctionnement et un montage relativement aisé.

Comme cela ressort de ce qui précède, on utilise une bague relativement mince par exemple emboutie et qui est emmanchée à force dans un logement qui, à lui seul, joue le rôle de ressort pour développer la précontrainte. Grâce à la variation de l'épaisseur donnée à la chemise, la précontrainte n'est pas procurée par un allongement circonférentiel de l'ensemble.

On comprend qu'au moment du montage, lors de l'engagement de la pièce intérieure dans la pièce extérieure équipée de sa chemise, les zones des arcs tendent à être repoussées vers l'extérieur ce qui, du fait de l'absence d'élongation possible, tend à rapprocher les sommets de l'axe. La longueur périphérique demeurant pratiquement constante, on obtient un déformation géométrique exempte de tout fluage de la matière. Ceci est illustré de manière schématique et notablement exagérée sur la Figure 5.

Dans le cas de l'application aux suspensions automobiles à bras tirés, il est nécessaire de définir l'axe géométrique d'oscillation de ce bras à l'aide de deux roulements. Une pièce extérieure 10 pour ce type d'application est représentée sur les Figures 6A et 6B.

Par exemple, dans le mode de réalisation représenté et décrit, la chemise 20 intercalaire creuse est munie au voisinage de l'une de ses extrémités d'une collerette 24 à fond 241 torique relativement plan bordé d'un anneau 242 axial. Cette collerette est destinée par exemple à recevoir un joint d'étanchéité du type par exemple exposé dans le document FR 2 568 328.

Dans un mode de réalisation, la chemise est par exemple faite en un acier de nuance 15MC auquel on fait subir un traitement thermique superficiel. Dans un mode de réalisation, la paroi extérieure 21 de la chemise 20 a un diamètre de l'ordre de 58 mm et une longueur de 20 mm environ. Le rebord 23 a, par exemple, une largeur de 3 mm environ, le fond 241 une largeur de 4 mm environ et l'anneau 242 une longueur axiale de 6 mm environ.

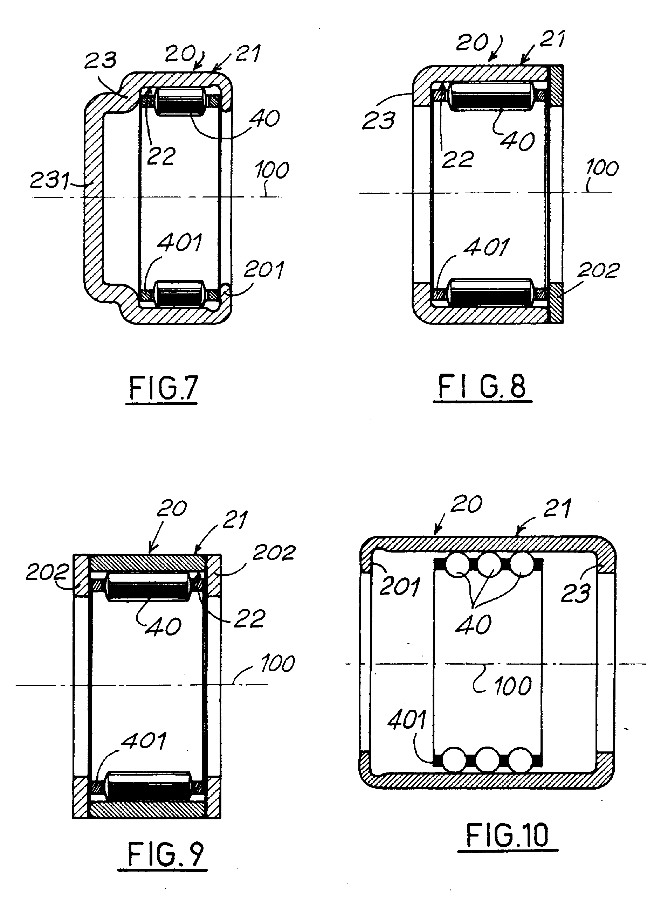

Pour le mode de réalisation de la Figure 7, la chemise intercalaire 20 comprend à une extrémité un rebord 23 terminé par une cuvette 231 et à l'autre extrémité un rabat 201 périphérique radial centripète. Les éléments roulants 40 sont des galets logés dans une cage 401.

Le mode de réalisation de la Figure 8 comprend un rebord 23 similaire à celui illustré sur la Figure 1, à une extrémité, et à l'autre extrémité un flasque 202 annulaire. Les éléments roulants 40 sont ici des aiguilles.

Le mode de réalisation de la Figure 9 comprend deux flasques 202.

Le mode de réalisation de la Figure 10 comprend une chemise intercalaire creuse 20 à rebord 23 et rabat 201. Les éléments roulants 40 sont ici des billes logées dans une cage 401.

Ce qui précède permet de se rendre compte immédiatement de l'intérêt de l'invention grâce à laquelle on obtient un palier radial à précontrainte du type roulement qui utilise un chemin de roulement extérieur porté par une bague relativement mince obtenue par exemple par emboutissage, emprisonnée dans un logement qui exerce seul la précontrainte élastique.

Le palier selon l'invention convient généralement à toutes les applications où il est nécessaire d'obtenir un roulement dans le moindre jeu radial ou à précontrainte, sans qu'il soit nécessaire de faire un réglage.

## Revendications

1. Palier radial à roulement précontraint où des éléments roulants sont interposés entre deux chemins de roulement, comprenant uniquement les pièces suivantes:
   - une pièce (10) extérieure avec un logement (11) cylindrique présentant un axe (100) et une paroi (110) intérieure à section droite circulaire,
   - une chemise (20) intercalaire creuse sous forme d'une bague unique relativement mince d'épaisseur non constante notamment en acier et présentant une paroi (21) extérieure à section droite circulaire et une paroi (22) intérieure à section droite triangulaire curviligne dont les sommets (221) sont séparés par des arcs (222) dont la concavité est tournée vers cet axe (100),
   - une pièce (30) intérieure avec une portée (31) extérieure présentant une paroi (310) extérieure à section droite circulaire de diamètre (D) donné déterminé, et
   - des éléments roulants (40) de diamètre (d) déterminé qui sont interposés entre chemise (20) et portée (31) et qui prennent appui, d'une part, sur la circonférence de la paroi extérieure (310) de la portée (31) qui sert de chemin de roulement intérieur et, d'autre part, sur les arcs (222) de la paroi intérieure (22) de la chemise (20) qui sert de chemin de roulement extérieur,

   dans lequel le périmètre de la section droite triangulaire curviligne de la paroi intérieure (22) de la chemise (20) est plus grand que la circonférence d'un cercle dont le diamètre est égal à la somme du diamètre (D) de la section droite circulaire de la paroi extérieure (310) de la portée (31) augmenté de deux fois le diamètre (d) des éléments roulants (40), et le diamètre ($\Delta$) d'un cercle inscrit tangent aux arcs (222) de la paroi (22) à section droite triangulaire curviligne est inférieur à la somme du diamètre (D) de la section droite circulaire de la paroi extérieure (310) de la portée (31) augmentée de deux fois le diamètre (d) des éléments roulants (40),

   et dans lequel la chemise (20) est engagée serrée dans le logement (11) de la pièce extérieure (10) sans interposition de pièce supplémentaire de manière que celle-ci (10) exerce à elle seule une précontrainte sur celle-là (20) sans allongement circonférentiel des parois (21, 110) en contact de la chemise (20) et du logement (11).

2. Palier selon la revendication 1, caractérisé en ce que la pièce (10) présente une partie avec un alésage et en ce que cet alésage constitue le logement (11), cette partie agissant seule pour développer une précontrainte sur la chemise (20).

3. Palier selon l'une quelconque des revendications 1 et 2, caractérisé en ce que la précontrainte assure la position axiale de la chemise (20) dans le logement (11) de la pièce extérieure (10).

4. Palier selon l'une quelconque des revendications 1 à 3, caractérisé en ce que les éléments roulants (40) sont des rouleaux, des aiguilles, des billes.

5. Application d'un palier selon l'une quelconque des revendications 1 à 4 aux systèmes où il faut obtenir un roulement sans le moindre jeu radial sans qu'il faille faire un réglage.

6. Application d'un palier selon l'une quelconque des revendications 1 à 4 notamment aux suspensions d'automobiles par exemple à bras tiré.

## Patentansprüche

1. Vorgespanntes Radialwälzlager, bei dem Wälzelemente zwischen zwei Rollwegen angeordnet sind, welches einzig folgende Teile aufweist:
   - ein Außenteil (10) mit einer zylindrischen Aufnahme (11), welches eine Achse (100) und eine Innenwand (110) mit kreisförmigem Querschnitt aufweist,
   - einen zwischengeschalteten Hohlmantel (20) in Form eines einzigen relativ dünnen Ringes einer nicht konstanten Dicke, insbesondere aus Stahl, und eine Außenwand (21) mit kreisförmigem Querschnitt und eine Innenwand (22) mit dreieckförmigem gekrümmtem Querschnitt, wobei die Spitzen durch Bögen (222) getrennt sind, deren Konkavität auf diese Achse (100) zu gerichtet ist, aufweisend,
   - ein Innenteil (30) mit einer äußeren Anlagefläche (31), welches eine Außenwand (310) mit kreisförmigem Querschnitt mit gegebenem bestimmtem Durchmesser (D) aufweist,
   - Wälzelemente (40) mit bestimmtem Durchmesser (d), die zwischen Mantel (20) und Anlagefläche (31) gelegt sind und einerseits am Umfang der Außenwand (310) der Anlagefläche (31), die als innerer Rollweg dient, und andererseits an den Bögen (222) der Innenwand (22) des Mantels (20), die als äußerer Rollweg dient, anliegen,

bei dem die äußere Begrenzung des dreieckförmigen gekrümmten Querschnitts der Innenwand (22) des Mantels (20) größer als der Umfang eines Kreises ist, dessen Durchmesser gleich der Summe aus dem Durchmesser (D) des kreisförmigen Querschnitts der Außenwand (310) der Anlägefläche (31) plus zweimal dem Durchmesser ($\underline{d}$) der Wälzelemente (40) ist, und der Durchmesser ($\Delta$) eines Kreises, der den Bögen (222) der Wand (22) mit dreieckförmigem gekrümmtem Querschnitt tangential einbeschrieben ist, kleiner als die Summe aus dem Durchmesser (D) des kreisförmigen Querschnitts der Außenwand (310) der Anlagefläche (31) plus zweimal dem Durchmesser ($\underline{d}$) der Wälzelemente (40) ist,

und bei dem der Mantel (20) in die Aufnahme (11) des Außenteiles (10) eingespannt ist, ohne Zwischenlegen zusätzlicher Teile, so daß dieses (10) allein auf jenen (20) eine Vorspannung ausübt, ohne umfangsmäßige Längung von Wänden (21, 110) im Kontakt mit dem Mantel (20) und der Aufnahme (11).

2. Wälzlager nach Anspruch 1, dadurch gekennzeichnet, daß das Teil (10) einen Abschnitt mit einer Bohrung aufweist und daß diese Bohrung die Aufnahme (11) bildet, wobei dieser Abschnitt allein wirkt, um eine Vorspannung auf den Mantel (20) zu entwickeln.

3. Wälzlager nach einem der Ansprüche 1 und 2, dadurch gekennzeichnet, daß die Vorspannung die axiale Position des Mantels (20) in der Aufnahme (11) des Außenteiles (10) sicherstellt.

4. Wälzlager nach einem der Ansprüche 1 bis 3, dadurch gekennzeichnet, daß die Wälzelemente (40) Walzen, Nadeln, Kugeln sind.

5. Verwendung eines Wälzlagers nach einem der Ansprüche 1 bis 4 in Systemen, wo ein Wälzen ohne das geringste radiale Spiel erhalten werden muß, ohne daß es eine Regelung erforderte.

6. Verwendung eines Wälzlagers nach einem der Ansprüche 1 bis 4 insbesondere bei Kraftfahrzeugaufhängungen, beispielsweise mit Zugschenkel.


## Claims

1. Prestressed rolling radial bearing in which rolling elements are interposed between two races, comprising only the following parts:

an external piece (10) with a cylindrical housing (11) having an axis (100) and an internal wall (110) of circular cross-section,

a hollow insert sleeve (20) in the form of a single, relatively thin ring of varying thickness, especially made of steel, and having an external wall (21) of circular cross-section and an internal wall (22) of curvilinear triangular cross-section the vertices (221) of which are separated by arcs (222) the concavity of which is turned towards this axis (100),

an internal piece (30) with an external seating (31) having an external wall (310) of circular cross-section of a specifed given diameter ($\underline{D}$),

and rolling elements (40) of a specified diameter ($\underline{d}$) which are interposed between the sleeve (20) and seating (31) and which bear, on the one hand, on the circumference of external wall (310) of the seating (31) which serves as internal race and, on the other hand, on the arcs (222) of the internal wall (22) of the sleeve (20) which serves as external race,

in which the perimeter of the curvilinear triangular cross-section of the internal wall (22) of the sleeve (20) is larger than the circumference of a circle the diameter of which is equal to the sum of the diameter (D) of the circular cross-section of the external wall (310) of the seating (31) increased by twice the diameter ($\underline{d}$) of the rolling elements (40), and the diameter ($\Delta$) of an inscribed circle tangent to the arcs (222) of the wall (22) of curvilinear triangular cross-section is less than the sum of the diameter (D) of the circular cross-section of the external wall (310) of the seating (31) increased by twice the diameter ($\underline{d}$) of the rolling elements (40),

and wherein the sleeve (20) is tightly engaged in the housing (11) of the external piece (10) without any additional parts interposed, in such a way that the latter (10) on its own exerts a prestress on the sleeve without any circumferential elongation of the walls (21, 110) in contact with the sleeve (20) and the housing (11).

2. Bearing according to Claim 1, characterised in that the piece (10) has a portion with a bore and in that this bore constitutes the housing (11), this portion acting on its own in order to develop a prestress on the sleeve (20).

3. Bearing according to any one of claims 1 to 2, characterised in that the prestress ensures the axial positioning of the sleeve (20) in the housing (11) of the external piece (10).

4. Bearing according to any of claims 1 to 3, characterised in that the rolling elements (40) are rollers, needles or balls.

5. Application of a bearing according to any one of claims 1 to 4 to systems in which it is necessary to obtain a bearing effect without the slightest radial play without the need for any adjustment.

6. Application of a bearing according to any one of claims 1 to 4, in particular to automobile suspensions, for example, with a trailing arm.

FIG. 1

FIG. 2

FIG.3

FIG.4

FIG.6A

FIG.6B

FIG.5

FIG.7

FIG.8

FIG.9

FIG.10